Europäisches Patentamt

European Patent Office

Office européen des brevets

(19)

(11) Veröffentlichungsnummer: **0 071 034**
**B1**

(12) # EUROPÄISCHE PATENTSCHRIFT

(45) Veröffentlichungstag der Patentschrift:
23.10.85

(51) Int. Cl.⁴: **B 23 K 7/02**

(21) Anmeldenummer: **82105864.1**

(22) Anmeldetag: **01.07.82**

(54) Schneidbrennmaschine mit Wiederholung ausgelassener Schnitte.

(30) Priorität: **24.07.81 US 286556**

(43) Veröffentlichungstag der Anmeldung:
**09.02.83 Patentblatt 83/6**

(45) Bekanntmachung des Hinweises auf die Patenterteilung:
**23.10.85 Patentblatt 85/43**

(84) Benannte Vertragsstaaten:
**DE FR GB IT**

(56) Entgegenhaltungen:
**US - A - 4 014 495**
**US - A - 4 121 808**

**MITTEILUNGEN DER BEFA, Band 24, Nr. 5 1973 H. HIRSCHBERG "Wirtschaftliche Brennschneiden mit Hilfe moderner Brennschneidmaschinen" Seiten 1 bis 7**

**Die Akte enthält technische Angaben, die nach dem Eingang der Anmeldung eingereicht wurden und die nicht in dieser Patentschrift enthalten sind.**

(73) Patentinhaber: **MESSER GRIESHEIM GMBH, Hanauer Landstrasse 330, D-6000 Frankfurt/Main 1 (DE)**

(72) Erfinder: **Balfanz, Fredrick J., 2008 Laura Lane, Waukesha Wisconsin 53051 (US)**

**Beschreibung**

Die vorliegende Erfindung betrifft ein Verfahren zur Wiederholung eines ausgelassenen Schnittes bei einer numerisch rechnergesteuerten Brennschneidmaschine nach dem Oberbegriff des Anspruchs 1.

Brennschneidmaschinen mit einer Mehrzahl Brenner zum Schneiden einer Mehrzahl von Stückreihen nacheinander aus einem flachen plattenförmigen Metallwerkstück sind seit langem bekannt. Ebenfalls ist es schon bekannt, ein rechnergesteuertes numerisches Regelsystem (CNC-Steuerung) mit einem programmierbaren Speicher zum automatischen Betrieb solcher Maschinen einzusetzen (US-PS 4 372 538).

Gelegentlich treten beim Brennschneiden einer Reihe von Stücken Schwierigkeiten dadurch auf, daß eine oder mehrere der Schneidflammen irgendwo entlang der Wegstrecke einer oder mehrerer der Brenner zu schneiden aufhören. Wenn der Arbeitsgang für diese Reihe zu Ende geführt wird, sind die Stücke bei den nicht ausgegangenen Flammen ordnungsgemäß geschnitten, während der Schnitt von Stücken ausgelassen wird, wo die Flamme zu schneiden aufhörte, so daß diese nicht fertiggestellt werden. So ergibt sich eine fehlerhafte Reihe.

Es ist bereits bekannt, den Reihenschneidgang umzukehren, um die Brenner an den Anfangspunkt des ausgelassenen Schnitts zu stellen, die Brenner hier neu einzustellen und dann den Rest des Arbeitsgangs erneut laufen zu lassen, um den ausgelassenen Schnitt bei jedem betroffenen Stück zu wiederholen.

Dabei ist es allerdings nötig, die Brenner am Anfangspunkt des ausgelassenen Schnittes neu einzustellen und im Schnitt die Stücke neu zu durchstechen. Dies führt zu einer Aufweitung der Schnittkanten und somit zu einem Schnittfehler an dem betreffenden Stück.

Das Auslassen eines Schnittes kann viele verschiedene Gründe haben. Einer der Hauptgründe ist, daß das Werkstück an irgendeiner Stelle gegenüber der Hitze der Flamme und dem Sauerstoffstrom isoliert wird. Dies kann von der Oberflächenbeschaffenheit des Metalls herrühren, wo an vereinzelten Stellen Rost oder Zunder vorliegen kann. Ein weiterer Grund ist die gelegentliche Fehleinstellung der Brennerhöhe oder der Wärmeabgabe durch den Maschinisten oder die CNC-Steuerung selbst.

Es wurde nun gefunden, daß ein hoher Prozentsatz der ausgelassenen Schnitte an oder nahe dem Anfangsdurchstichpunkt zum Schneiden beginnt, der auf einer Einführlinie für das zu schneidende Stück liegt. Üblicherweise ist dies eine Folge der oben erwähnten Fehleinstellung, so daß die Flamme den ersten Durchstich des Werkstücks am Anfangsdurchstichpunkt nicht erreicht.

Bei der in Rede stehenden Art eines Brennschneidvorganges endet der Reihenschneidtakt üblicherweise in kurzem Abstand, z. B., 12 mm, vom Anfangsdurchstichpunkt auf der Einführlinie. Eine Umkehrung des Schneidvorgangs, so daß sämtliche Brenner ihren vollständigen Schneidweg vom Schneidenpunkt zurück zum Anfangsdurchstichpunkt oder dessen Nähe durchlaufen, um einen ausgelassenen Schnitt zu wiederholen, ist unerwünscht, insbesondere im Hinblick auf die erforderliche Zeit.

Der Erfindung liegt die Aufgabe zugrunde, ein Verfahren und eine Brennschneidmaschine zur Durchführung des Verfahrens zu schaffen, die es dem Maschinisten ermöglicht, eine Wiederholung ausgelassener Schnitte besser als durch Umkehr des Reihenschneidvorgangs zu erzielen.

Eine weitere Aufgabe der Erfindung besteht darin, dem Maschinisten die Wahl zu geben, die Brenner direkt vom Schnittendpunkt zum nahe gelegenen, sehr wahrscheinlich vom ausgelassenen Schnitt nicht weit entfernten Anfangsdurchstichpunkt zu fahren, um zumindest einen Teil des vorangegangenen Schneidtakts in derselben Reihe zu wiederholen.

Diese Aufgaben werden bei einem gattungsgemäßen Verfahren durch die kennzeichnenden Merkmale des Anspruchs 1 und bei einer gattungsgemäßen Brennschneidmaschine durch die kennzeichnenden Merkmale des Anspruchs 2 gelöst.

Weiterbildungen der Erfindung sind in den Unteransprüchen angegeben.

Die mit der Erfindung erzielten Vorteile bestehen insbesondere darin, daß einerseits durch das direkte Anfahren der Anschnittpunkte kürzere Maschinenhauptzeiten erzielt und andererseits bei Wiederholungen der Schnitte die Schnittqualität der Schneidkanten nicht verschlechtert wird.

Die beigefügten Zeichnungen erläutern die beste gegenwärtig vom Erfinder in Betracht gezogene Art und Weise zur Durchführung der Erfindung. Es zeigt

Fig. 1 einen allgemein schematischen, perspektivischen Überblick einer Brennschneidmaschine, bei der die Erfindungsgedanken verwirklicht sind.

Fig. 2 einen Ausschnitt des Steuerpults für die CNC-Steuerung; und

Figur 3 eine schematische Ansicht einer Reihe von drei aus dem Werkstück zu schneidenden Stücken.

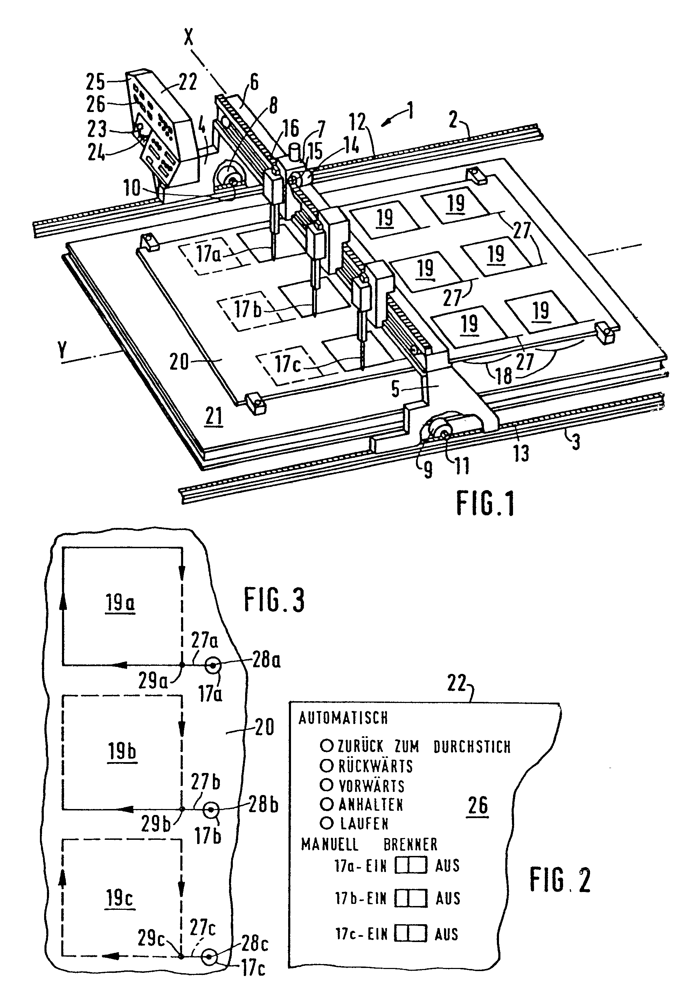

Wie Fig. 1 zeigt, wird der Erfindungsgedanke bei einer auf einem am Boden befestigten parallelen Schienenpaar 2 und 3 angeordneten Schneidbrennmaschine 1 zur Anwendung gebracht. Die Trägergestelle 4 und 5 sind entlang den entsprechenden Schienen beweglich gelagert, wobei die Gestelle die Enden einer sich über das Schneidfeld erstreckenden Querstrebe oder -brücke 6 abstützen. Mehrere Schlitten 7 sind in geeigneter Weise entlang der Brücke 6 beweglich gelagert und lassen sich auf irgendeine geeignete wohlbekannte Weise für gleichzeitige Bewegung entlang der Brücke 6 zusammenkuppeln.

Die Brücke 6 definiert eine X-Hauptachse, während die Schienen 2 und 3 für Bezugszwecke einer Y-Hauptachse parallel sind.

Die Brücke 6 ist durch irgendwelche geeignete Antriebsmechanismen, wie in den Gestellen 4 bzw. 5 gelagerten Motoren 8 bzw. 9, die mit entlang den Schienen 2 bzw. 3 angeordneten Zahnstangen 12 bzw. 13 in Eingriff stehende Ritzel 10 bzw. 11 aufweisen, in der Y-Achsrichtung verfahrbar. Auf ähnliche Weise sind die gekuppelten Schlitten 7 mittels irgendwelcher geeigneter Antriebsmechanismen, wie einem Motor 14, der ein mit einer auf der Brücke angeordneten Zahnstange 16 in Eingriff stehendes Ritzel 15 aufweist, auf einem der Schlitten, in der X-Achsrichtung entlang der Brücke 6 verfahrbar.

Die Schlitten 7 tragen Schneidbrenner 17a, 17b und 17c, die von irgendeiner geeigneten herkömmlichen, nicht gezeigten Quelle mit dem erforderlichen Strom und Brennstoff, einschließlich Sauerstoff, versorgt werden.

Die Maschine 1 ist dazu eingerichtet, eine Mehrzahl von Reihen 18 von mehreren Stücken 19 aus einem flachen plattenförmigen Metallwerkstück 20 zu schneiden, das starr auf einem feststehenden Träger 21 angebracht sein kann. Die Konfiguration der Stücke 19 kann irgendeine geeignete Kontur besitzen, wobei die hier gezeigten rechteckig sind.

Jede Reihe 18 von Stücken 19 soll individuell geschnitten werden, und die Maschine soll dann zur nächsten Reihe, zum gleichzeitigen Schneiden von deren Stücken, weiterfahren. Dabei kann dieser Vorgang mit Hilfe eines rechnergesteuerten numerischen Regelsystems (CNC-Steuerung) 22, die wie gezeigt auf dem Gestell 4 angeordnet ist, automatisch erfolgen. Die CNC-Steuerung 22 dient dazu, die Brücke 6 und die Schlitten 7 mittels ihrer entsprechenden Antriebsmechanismen entlang der gewünschten Strecke relativ zu den X- und Y-Achsen zu verfahren, um den endgültigen Schneidweg für die Stücke 19 zu bilden.

Die CNC-Steuerung 22 gehört zu irgendeinem auf dem Metallschneidgebiet herkömmlichen, wohlbekannten Typ und umfaßt unter anderem eine Programmiereinrichtung, die hier ein Papier- oder Magnetband 23 enthält, welches über den üblichen Abtastkopfteil 24 läuft, der seinerseits zur Eingabe an die Speichereinheit 25 der CNC-Steuerung dient. Siehe U. S. Patentschriften 4 014 495 und 4 121 808 für weitere Einzelheiten über programmierbare numerische Steuereinrichtungen.

In diesem speziellen Fall enthält das Programm und somit der Speicher 25 die X- und Y-Koordinaten des Anfangsdurchstichpunkts einer gegebenen Reihe, das Einschalten der Brenner, die Kontur des Schnittes selbst, den Schnittendpunkt, die automatische Schneidbewegung sowie die nachfolgende automatische Verfahrung der Brenner 17a—17c an den Anfangsdurchstichpunkt der nächsten Reihe. In der programmierbaren Steuerung ist auch eine wahlweise manuell betätigbare Regelung des automatischen Betriebs der Befehle für Rückwärts, Vorwärts, Anhalten und Laufen vorgesehen. Die Brennerfunktionen lassen sich ebenfalls manuell durchführen. Siehe die Vorderseite des Pults 26 der CNC-Steuerung 22 (Fig. 2). Der Fachmann ist mit all diesem vertraut.

Wie oben erläutert enthält das Programm im automatischen Betrieb Anweisungen dafür, daß beim Drücken des Befehlsknopfs »Zurück zum Durchstich« auf dem Pult 26 die Brenner nicht automatisch auf die nächste Reihe von Stücken 19 weiterlaufen, sondern stattdessen automatisch direkt vom Endpunkt zum Anfangsdurchstichpunkt derselben Reihe fahren.

Fig. 3 zeigt eine Darstellung einer Einzelreihe von Stücken 19a, 19b, 19c zum Schneiden. Die Linien bedeuten die gewünschten Konturen der Stücke, wobei die ausgezogenen Linien die eigentlichen, durch die Brenner 17a, 17b bzw. 17c geschnittenen Teile und die gestrichelten Linien solche Teile darstellen, über die zwar der entsprechende Brenner gelaufen ist, die aber wegen ungenügender Oxydation und Verlust an Schneidhitze ungeschnitten geblieben sind. Fig. 3 zeigt ferner die üblichen Einführlinien 27a, 27b, 27c mit Anfangsdurchstichpunkten 28a, 28b, 28c an ihren äußeren Enden sowie die Schnittendpunkte 29a, 29b, 29c an der Stoßstelle der Einführlinien mit den Schneidstücken selbst.

Probleme mit ausgelassenen Schnitten treten durchaus nicht bei allen Schneidstücken jeder einzelnen Reihe auf, doch ist dies nur zur Erläuterung in Fig. 3 so gezeigt.

Während die Maschine 1 automatisch durch die CNC gesteuert einen Schneidgang durchläuft, fällt der Schnitt für Stück 19a gerade kurz vor Erreichen des Endpunkts 29a aus; bei Stück 19b erfolgt dies an einer Stelle ungefähr 1/3 des Weges um die Kontur herum vom Anfangsdurchstichpunkt 28b; und bei Stück 19c ist der Schnitt von Anfang an am Durchstichpunkt 28c auf der Einführlinie 27c ausgelassen. Das Programm läßt dennoch alle drei Brenner die ganze Reihe durchlaufen, bis jeder einzelne die entsprechenden Endpunkte 29a—29c erreicht hat. Wird vom Maschinisten weiter nichts unternommen, so läuft die Maschine zu den Anfangsdurchstichpunkten auf der Einführlinie der nächsten Reihe weiter. Natürlich steht dies dem Maschninisten frei. Hingegen dürfte er eher eines oder mehrere der mangelhaft geschnittenen Stücke zu retten wünschen. Dabei kann er dann den Knopf »Anhalten« auf dem Pult 26 drücken, um den Fortlauf des normalen Programms aufzuhalten.

Während der Wiederholung eines ausgelassenen Schnitts bleibt die CNC-Steuerung in automatischem Betrieb, doch drückt der Maschinist bestimmte Knöpfe auf dem Pult 26, um die automatische Folgesteuerung zu unterbrechen.

Bei dem Stück 19a, da hier der Schnitt in der Nähe des Endpunkts 29a aussetzte, kann der Maschinist den »Rückwärts«-Knopf drücken, wodurch alle Brenner zu der Stelle zurückgefahren werden, wo der Schnitt auf Stück 19a aussetzte, und dann wiederum den Knopf »Anhalten« drükken. Dann kann er den Brenner 17a manuell einschalten, wobei die anderen Brenner ausgeschaltet bleiben und die »Vorwärts«- und »Rückwärts«-Knöpfe drücken. Dadurch läßt die CNC-Steuerung alle Brenner ihren Weg zu den entsprechenden Endpunkten 29a—29c wieder durchlaufen, so daß der Rest des Stücks 19a geschnitten wird. Danach kann der automatische normale Vorwärtsbetrieb des Programms fortlaufen und die Brenner zur nächsten Reihe fahren.

Bei Stück 19b würde es jedoch erhebliche Zeit erfordern, wie bei der ersten Erläuterung den gesamten Weg bis zum Anfang des ausgelassenen Stückes zurückzufahren, der ja wegen seiner Position dem Anfangsdurchstichpunkt 28b erheblich näher liegt. In dieser Situation wird der Maschinist deshalb nach Anhalten der Brenner an ihren entsprechenden Endpunkten 29a—29c den Knopf »Zurück zum Durchstich« auf dem Pult 26 drücken, wodurch die Brenner automatisch von dem Punkten 29a—29c direkt zu ihren entsprechenden Anfangsdurchstichpunkten 28a—28c in derselben Reihe verfahren werden. Dann kann man die Maschine mit ausgeschalteten Brennern vorwärts laufen lassen, bis der Brenner 17b den Aussetzpunkt des Schnitts erreicht, zu welcher Zeit der Maschinist nur den Brenner 17b einschaltet und die Maschine in ihrem automatischen Betrieb fortfahren läßt, wobei sie ihren ursprünglichen Schneidweg zu den Endpunkten 29a—29c erneut durchläuft. Danach kann der Betrieb automatisch vorwärts zur nächsten Reihe weitergehen.

Bei Stück 19c ist es ersichtlich, daß dieser Schnitt aus den oben angegebenen Gründen von Anfang an ausgelassen wurde. Wenn bei dieser Sachlage die Brenner ihre entsprechenden Endpunkte 29a—29c erreichen und anhalten, drückt der Maschinist den Knopf »Zurück zum Durchstich« und schaltet nur den Brenner 17c ein. Die Brenner einschließlich dem Brenner 17c fahren automatisch vorwärts direkt zu den entsprechenden Anfangsdurchstichpunkten 28a—28c in derselben Reihe. Danach kann man die Maschine in ihrem üblichen automatischen Betrieb zum Schneiden des ganzen Stücks vorwärtslaufen lassen, wobei der Brenner 17c am Endpunkt 29c ankommt. Von da an läuft der Betrieb weiter.

Im Rahmen der nachfolgenden Ansprüche, die insbesondere auf den als die Erfindung zu betrachtenden Gegenstand hinweisen und diesen speziell beanspruchen, kommen verschiedene Ausführungsformen der Erfindung in Frage.

## Patentansprüche

1. Verfahren zur Wiederholung eines ausgelassenen Schnittes bei einer numerisch rechnergesteuerten Brennschneidmaschine mit einer Mehrzahl von zur Betätigung in automatischen Betrieb an eine programmierbare numerische Steuerung (22) angeschlossenen Brennern (17) zum automatischen aufeinanderfolgenden Schneiden von mehreren Reihen einer Mehrzahl von Stücken (19) aus einem plattenförmigen Werkstück, wobei die numerische Steuerung (22) dazu programmiert ist, zunächst jeden Brenner nacheinander am Anfangsdurchstichpunkt (28) auf dem Werkstück anzuordnen und den ursprünglichen Schnitt eines Stückes durchzuführen und am Endpunkt (29) in gewissem Abstand von diesem Anfangsdurchstichpunkt zu vervollständigen, dadurch gekennzeichnet, daß man stufenweise:

a) wahlweise den automatischen Folgebetrieb der programmierbaren numerischen Steuerung (22) unterbricht, um die Brenner automatisch von ihren jeweiligen Endpunkten (29) in der Reihe geschnittener Stücke (19) hinweg zu ihren jeweilgen Anfangsdurchstichpunkten (28) in dieser letztgenannten Reihe zu verfahen

b) diese Brenner in dieser Reihe geschnittener Stücke (19) an den Anfangsteil eines ausgelassenen Schnittes verfährt,

c) nur diesen bei dem besagten ausgelassenen Teil befindlichen Brenner (17) einschaltet und

d) dann den ursprünglichen Schneidweg vorwärts durchlaufen läßt, um den ausgelassenen Schnitteil endgültig zu schneiden.

2. Numerisch rechnergesteuerte Brennschneidmaschine zur Durchführung des Verfahrens nach Anspruch 1 mit

a) einer entlang einer Y-Achse beweglich gelagerten Brücke (6),

b) einer Mehrzahl entlang einer X-Achse auf dieser Brücke (6) beweglich gekoppelter Schlitten (7),

c) auf diesen Schlitten (7) zum Schneiden des Werkstückes (20) angeordneten Schneidbrennern (17),

d) Antriebsmechanismen (8, 9, 14) zum Verfahren dieser Brücke (6) und dieser Schlitten (7) entlang ihren jeweiligen Achsen,

e) einer programmierbaren numerischen Steuerung (22) zur Betätigung jener Antriebsmechanismen (8, 9, 14) und Brenner (17), um automatisch nacheinander eine Mehrzahl Reihen von Stücken (19) aus dem Werkstück (20) zu schneiden, wobei

f) diese numerische Steuerung (22) dazu programmiert ist, in automatischen Betrieb zunächst jeden solchen Brenner (17) nacheinander jeweils am Anfangsdurchstichpunkt (28) auf dem Werkstück (19) anzuorndnen und den ursprünglichen Schnitt eines Stücks am Endpunkt in gewissem Abstand von jenem Anfangsdurchstichpunkt zu vervollständigen und wobei

g) diese numerische Steuerung (22) auch dazu programmiert ist, in solchem automatischem Betrieb diese Brenner (17) automatisch jeweils von den Endpunkten (29) zur nächsten Stückreihe zu fahren,

gekennzeichnet durch

h) wahlweise betätigbare Mittel zur Unterbrechung des automatischen Folgebetriebs dieser programmierbaren numerischen Steuerung (22), um diese Brenner (17) automatisch von ihren jeweiligen Endpunkten (29) in der Reihe geschnittener Stücke hinweg direkt zu ihren jeweiligen Anfangsdurchstichpunkten (28) in dieser zuletzt genannten Reihe zu verfahren, um nachträglich einen oder mehrere ausgelassene Schnitte zu wiederholen.

3. Numerisch rechnergesteuerte Brennschneidmaschine nach Anspruch 2, gekennzeichnet durch weitere wahlweise betätigbare Mittel zur Betätigung des normalen automatischen Vorwärtslaufs der besagten programmierbaren Steuerung (22), um jene Brenner (17) erneut ihren ursprünglichen Schneidweg vorwärts durchlaufen zu lassen, nachdem sie jeweils von ihrem Endpunkt (29) in der Reihe geschnittener Stücke (19) aus ihre Anfangsdurchstichpunkte (28) erreicht haben.

4. Numerisch rechnergesteuerte Brennschneidmaschine nach Anspruch 2, gekennzeichnet durch

a) zweite wahlweise betätigbare Mittel zur Unterbrechung des automatischen Folgebetriebs der besagten programmierbaren numerischen Steuerung (22), um diese Brenner (17) entgegen der Schneidrichtung von ihren jeweiligen Endpunkt (29) in der Reihe geschnittener Stücke (19) zum Anfangsteil eines ausgelassenen Schnitts zu verfahren und

b) dritte wahlweise betätigbare Mittel zur Betätigung des normalen automatischen Vorwärtslaufs der besagten programmierbaren Steuerung (22), um jene Brenner (17) erneut ihren ursprünglichen Schneidweg durchlaufen zu lassen, nachdem sie den besagten Anfangsteil eines ausgelassenen Schnitts erreicht haben.

5. Numerisch rechnergesteuerte Brennschneidmaschine nach Anspruch 2, 3 oder 4, gekennzeichnet durch wahlweise betätigbare Mittel zur jeweiligen Betätigung eines solchen Brenners (17) unabhängig von den übrigen, so daß ein sich über einen ausgelassenen Schnitteil bewegender Brenner (17) eingeschaltet wird und ein sich über einen zuvor geschnittenen Teil bewegender Brenner (17) ausgeschaltet ist.

## Claims

1. A method of re-establishing a lost cut made by a computerized numerically controlled flame cutting machine having a plurality of torches (17) connected for actuation in an automatic mode by a programmable numerical control (22) for cutting a plurality of rows of a plurality of pieces (19) automatically in succession from a plate-like workpiece, and wherein the numerical control (22) is programmed to sequentially initially position each torch at a start-pierce point (28) on the workpiece and to originally cut and then complete the original cut of a piece at a termination point (29) spaced from said start-pierce point, said method comprising the steps of:

a) selectively interrupting the automatic mode sequencing of the programmable numerical control (22) to automatically move the torches from their respective termination points (29) in the row of cut pieces (19) directly to their respective start-pierce points (28) in said last-named row,

b) moving said torches in said row of cut pieces (19) to the portion of commencement of a lost cut,

c) actuating only the torch (17) which is adjacent the said lost cut portion,

d) and then forwardly retracing the original cutting path to finally cut the lost cut portion.

2. A computerized numerically controlled flame cutting machine for realization the method according to claim 1 comprising

a) a bridge (6) mounted for movement along a Y axis,

b) a plurality of carriages (7) ganged together on said bridge (6) for movement along an X axis,

c) flame cutting torches (17) mounted to said carriages (7) for cutting said workpiece (20),

d) motive means (8, 9, 14) for moving said bridge (6) and carriages (7) along their respective axes,

e) programmable numerical control means (22) for actuating said motive means (8, 9, 14) and said torches (17) to cut a plurality of rows of a plurality of pieces (19) automatically in succesion from the workpiece (20),

f) said numerical control means (22) being programmed with an automatic mode to sequentially initially position each said torch (17) at a start-pierce point (28) on the workpiece (20) and to complete the original cut of a piece at a termination point spaced from said start-pierce point,

g) said numerical control means (22) also being programmed in the said automatic mode to sequentially move said torches (17) automatically from the respective termination points (29) to the next row of pieces, characterized in

h) selectively actuatable means to interrupt the automatic mode sequencing of said programmable numerical control means (22) to cause said torches (17) to automatically move from their respective termination points (29) in the row of cut pieces and directly to their respective start-pierce points (28) in said last-named row for subsequent re-establishment of one or more lost cuts.

3. A computerized numerically controlled flame cutting machine of claim 2 which includes: further selectively actuatable means to actuate the normal forward automatic sequencing of said programmable control means (22) to cause said torches (17) to forwardly retrace their original cutting path subsequent to reaching the respective startpierce points (28) from the respective termination points (29) in the row of cut pieces.

4. A computerized numerically controlled flame cutting machine of claim 2 which includes:

a) second selectively actuatable means to interrupt the automatic mode sequencing of said programmable numerical control means (22) to cause said torches (17) to move in a reverse cutting direction from the respective termination points (29) in the row of cut pieces (19) and to the commencement portion of a lost cut,

b) and third selectively actuatable means to actuate the normal forward automatic sequencing of said programmable control means (29) to cause said torches (17) to retrace their original cutting path subsequent to reaching the said commencement portion of a lost cut.

5. A computerized numerically controlled flame cutting machine of claim 2, 3 or 4 which includes: selectively actuatable means for actuating each said torch (17) independently of the other torches (17) so that a torch traversing a lost cut portion is on and a torch (17) traversing a previously cut portion is off.

**Revendications**

1. Procédé de reprise d'une coupe omise dans une machine à découper au chalumeau commandée par un calculateur numérique, ayant plusieurs chalumeaux (17) reliés à une commande numérique programmable (22) pour la mise en oeuvre en fonctionnement automatique, pour découper successivement de façon automatique, plusieurs rangées de plusieurs éléments (19) dans une pièce en forme de plaque, la commande numérique (22) étant programmée de façon à associer chaque chalumeau successivement à un point d'attaque (28) de la pièce et de parcourir la coupe initiale d'un élément et de compléter au point d'extrémité (29) à une certaine distance du point d'attaque, caractérisé en ce qu'on effectue par étapes les opérations suivantes:

a) on interrompt sélectivement le fonctionnement séquentiel automatique de la commande numérique programmable (22) pour déplacer automatiquement les chalumeaux de leur point d'extrémité (29) correspondant de la rangée des éléments découpés (19) vers leur point d'attaque respectif (28) dans cette dernière rangée,

b) on déplace ces chalumeaux dans cette rangée d'éléments découpés (19) jusqu'à la partie initiale d'une coupe omise,

c) on ne branche que le chalumeau (17) qui correspond à la partie omise, mentionnée, et

d) on parcourt de nouveau en avançant la trajectoire de découpe initiale pour découper définitivement la partie de coupe omise.

2. Machine à découper au chalumeau à commande par calculateur numérique pour la mise en oeuvre du procédé selon la revendication 1 comportant:

a) un pont (6) mobile le long d'un axe Y,

b) plusieurs chariots (7), couplés de façon mobile, le long d'un axe X de ce pont (6),

c) des chalumeaux de découpage (17) prévus sur ces chariots (7) pour découper la pièce (20),

d) des mécanismes d'entraînement (8, 9, 14) pour déplacer ce pont (6) et ces chariots (7) le long des axes respectifs,

e) une commande numérique programmable (22) pour mettre en oeuvre chaque mécanisme d'entraînement (8, 9, 14) et les chalumeaux (17) pour découper automatiquement, successivement, plusieurs rangées d'éléments (19) dans la pièce (20), et

f) cette commande numérique (22) est programmée de façon qu'en fonctionnement automatique, chacun des chalumeaux (17) soit associé successivement à chaque point d'attaque (28) de la pièce (19) et pour réaliser la découpe initiale d'un élément au point final à une certaine distance de chaque point d'attaque, et,

g) cette commande numérique (22) est également programmée pour un tel fonctionnement automatique de façon que ces chalumeaux (17) viennent automatiquement des points d'extrémité (29) jusqu'à la rangée suivante,

caractérisée par:

h) des moyens mis en oeuvre sélectivement pour interrompre le fonctionnement séquentiel automatique de cette commande numérique programmable (22), pour faire passer automatiquement ces chalumeaux (17) de leur point d'extrémité respectif (29) de la rangée d'éléments découpés, et les conduire directement vers les points d'attaque respectifs (28) de la rangée mentionnée en dernier lieu, pour répéter après cela une ou plusieurs coupes omises.

3. Machine à découper au chalumeau à commande numérique par ordinateur selon la revendication 2, caractérisée par d'autres moyens à mise en oeuvre sélective pour mettre en oeuvre le mouvement d'avance automatique normal de la commande programmée (22) pour permettre à chaque chalumeau (17) de parcourir une nouvelle fois dans le sens de l'avance sa trajectoire de découpe initiale, après que ces chalumeaux aient atteint leur point d'attaque (28) à partir de leur point d'extrémité (29) de la rangée des éléments découpés (19).

4. Machine à découper au chalumeau à commande numérique par calculateur selon la revendication 2, caractérisée par:

a) des seconds moyens à mise en oeuvre sélective pour interrompre le fonctionnement séquentiel automatique de la commande numérique programmable (22), pour pouvoir déplacer les chalumeaux (17) dans le sens opposé de la direction de découpe à partir de leur point d'extrémité respectif (29) de la rangée d'éléments coupés (19) pour revenir à la partie initiale d'une coupe omise et,

b) des troisièmes moyens à mise en oeuvre sélective pour mettre en oeuvre le mouvement d'avance automatique normal de la commande programmable (22) cidessus, pour permettre à chaque chalumeau (17) de parcourir une nouvelle fois sa trajectoire de coupe initiale, après avoir atteint la partie initiale mentionnée d'une coupe omise.

5. Machine de découpage au chalumeau à commande numérique par ordinateur selon les revendication 2, 3 ou 4, caractérisée par: des moyens à mise en oeuvre sélective pour actionner respectivement un chalumeau (17) indépendamment des autres pour brancher le chalumeau (17) qui parcourt la partie de coupe omise, et pour mettre hors service un chalumeau (17) qui se déplace sur un élément découpé précédemment.

FIG.1

FIG.3

22

AUTOMATISCH

○ ZURÜCK ZUM DURCHSTICH
○ RÜCKWÄRTS
○ VORWÄRTS
○ ANHALTEN          26
○ LAUFEN

MANUELL   BRENNER

17a-EIN ☐☐ AUS

17b-EIN ☐☐ AUS

17c-EIN ☐☐ AUS

FIG.2